# FASCICULE DE BREVET EUROPEEN

(11) **EP 1 639 057 B1**
(45) Date de publication et mention de la délivrance du brevet: **16.09.2015**
(21) Numéro de dépôt: 04767229.0
(22) Date de dépôt: 02.06.2004
(51) Int. Cl.: C09K 3/10, C09K 3/30

(54) **DISPOSITIF DE DISTRIBUTION DE PRODUIT FLUIDE COMPORTANT UN JOINT DE VALVE**
VORRICHTUNG ZUR ABGABE EINES FLÜSSIGPRODUKTS AUSGERÜSTET MIT EINER VENTILDICHTUNG
DEVICE FOR DISPENSING A FLUID PRODUCT PROVIDED WITH A VALVE SEAL

(30) Priorité: 06.06.2003 FR 0306835
(43) Date de publication de la demande: 29.03.2006
(73) Titulaire: Aptar France SAS, 27110 Le Neubourg (FR)
(72) Inventeur: BARRANCO, Sandrine, 27180 Saint-Sebastien-de-Morsent (FR); PARDON, Fleur, 27110 Daubeuf la Campagne (FR)
(74) Mandataire: CAPRI
(86) Numéro de dépôt international: PCT/FR2004/001358
(87) Numéro de publication internationale: WO 2005/003251

(56) Documents cités:
- EP-A- 0 969 069
- WO-A-95/02651
- DE-A- 19 953 450
- US-A- 4 447 488
- US-A- 5 177 139
- DATABASE CA [Online] CHEMICAL ABSTRACTS SERVICE, COLUMBUS, OHIO, US; CUNDELL, A. M. ET AL: "Effects of microbiocides on the microbiological deterioration of vulcanized natural rubber" XP002312197 extrait de STN Database accession no. 1975:99642 & DEVELOPMENTS IN INDUSTRIAL MICROBIOLOGY SERIES , 14, 253-7 CODEN: DIMCAL; ISSN: 0070-4563, 1973,
- DATABASE WPI Section Ch, Week 198448 Derwent Publications Ltd., London, GB; Class A12, AN 1984-297698 XP002312198 & JP 59 184636 A (SUMITOMO RUBBER IND LTD) 20 octobre 1984 (1984-10-20)
- DATABASE WPI Section Ch, Week 199226 Derwent Publications Ltd., London, GB; Class A89, AN 1992-211566 XP002312199 & JP 04 133078 A (SUMITOMO RUBBER IND LTD) 7 mai 1992 (1992-05-07)

## Description

La présente invention concerne un distributeur de produit fluide comportant au moins un joint de valve.

Il est connu, notamment pour distribuer des produits pharmaceutiques, d'utiliser des dispositifs du type aérosol, dans lesquels le produit est distribué au moyen d'un gaz propulseur. Pour des raisons écologiques, les propulseurs utilisés précédemment, qui étaient généralement à base de CFC, ont été remplacés par d'autres gaz propulseurs, et notamment des gaz propulseurs du type HFC-134a ou HFC-227. Il s'est avéré que cette modification du gaz propulseur engendrait des contraintes différentes sur les joints, que ce soit au niveau de la performance d'étanchéité dudit joint, ou au niveau des extractibles lorsque ledit joint était en contact avec ces nouveaux gaz propulseurs. Il s'est donc avéré que les matériaux de joint habituellement utilisés dans les valves aérosol en conjonction avec des gaz CFC ne pouvaient pas être simplement appliqués aux nouveaux gaz propulseur. Différents matériaux ont donc été développés pour être utilisés avec ces gaz HFC. Parmi ces matériaux, l'éthylène propylène (EP) et l'éthylène propylène diène (EPDM) se sont avérés être des matériaux appropriés. Un autre problème qui peut se poser avec les gaz HFC, est que lorsqu'ils sont utilisés avec un cosolvant, par exemple de l'éthanol, il y a une tendance de séparation de l'alcool, qui est moins soluble dans la phase liquide des HCF, ce qui expose les joints a une plus grande concentration d'alcool que cela a été le cas précédemment avec les gaz CFC. Pour résoudre ce problème, l'éthylène propylène et l'éthylène propylène diène se sont également avérés être des matériaux appropriés.

Le document EP-0 969 069 divulgue un joint de valve destiné à un distributeur de produit fluide comprenant de l'EPDM ainsi qu'une charge minérale comprenant du silicate de magnésium et/ou du Kaolin. La présence de ces charges minérales a pour but d'améliorer les propriétés du joint, notamment en ce qui concerne l'étanchéité.

Les documents US-4 447 448, US-5 177 139 et l'article Chemical Abstracts Service, Columbus, Ohio, Cundell et al. « Effects of microbiocides on the microbiological deterioration of vucanized natural rubber », XP002312197, 1975:99642 décrivent des dispositifs de l'état de la technique.

La présente invention a pour but de fournir un distributeur ayant un joint de valve comprenant une charge minérale différente, pour obtenir des bonnes caractéristiques pour le joint, notamment en ce qui concerne les performances d'étanchéité, les propriétés élastiques, et le procédé de fabrication du joint.

La présente invention a aussi pour but de fournir un distributeur avec un tel joint de valve ayant des propriétés de glissement améliorées et présentant un taux de relarguage d'extractibles inférieur.

La présente invention a également pour but de fournir un distributeur avec un tel joint de valve qui est plus simple et moins coûteux à fabriquer que les joints de valve connus antérieurement.

La présente invention a donc pour objet un distributeur selon la revendication 1.

Des modes de réalisation avantageux sont décrits dans les revendications dépendantes.

La charge minérale de la présente invention présente une structure qui est à la fois granuleuse et lamellaire. Ceci permet d'améliorer les propriétés élastiques du joint, d'améliorer les performances d'étanchéité du joint, et simplifie également le procédé de fabrication dudit joint. Un matériau particulièrement adapté à être utilisé selon la présente invention est le Sillitin, qui est un mélange naturel de quartz et de kaolinite. Ce matériau n'a jamais été utilisé dans la fabrication de joints de valve, en particulier de joint de valve dynamique conte lequel coulisse la soupape de valve.

Les deux tableaux suivants montrent une comparaison entre le sillitin et le kaolin, d'une part en ce qui concerne leurs formules chimiques et d'autre part en ce qui concerne les caractéristiques de ces produits.

### 1) Formules chimiques:

| **Charges** | **Formules** |
|---|---|
| Sillitin (Mélange naturel de quartz (80%) et de kaolinite (20%)) | Al₄[(OH)₈Si₄O₁₀] - SiO₂ |
| Kaolin | Al₂O₃ - 2SiO₂ |

### 2) Caractéristiques :

| **Caractéristiques** | **Sillitin** | **Kaolin** |
|---|---|---|
| Analyses chimiques: | | |
| ➢ Al₂O₃ (%) | 8 | 44 |
| ➢ SiO₂ (%) | 87 | 52 |
| ➢ Autres (%) | 5 | 4 |
| pH | 7-8 | 5-6 |
| Taille moyenne des particules (µm) | 2,2 | 1,4 |

En se référant plus particulièrement au tableau concernant les caractéristiques, on constate que le Sillitin contient nettement moins d'Al₂O₃ et nettement plus de SiO₂ par rapport au kaolin. La structure à la fois granuleuse et lamellaire du Sillitin permet d'améliorer les performances du joint par rapport à un joint ayant le même élastomère, par exemple de l'EP ou de l'EPDM, mais une charge minérale constituée de kaolin. Le pH neutre peut permettre de limiter les interactions entre le joint et le principe actif contenu dans le produit fluide à distribuer.

Il s'est donc avéré qu'un joint comprenant de l'EP et/ou de l'EPDM, et une charge minérale comprenant du Sillitin est particulièrement adapté à être utilisé avec des gaz HFC. Il est également particulièrement adapté à être utilisé avec des gaz HFC, en présence d'alcool, notamment d'éthanol.

La présente invention permet donc d'améliorer le joint décrit dans le document EP-0 969 069.

Selon un mode de réalisation avantageux, le joint peut en outre être soumis à un traitement de chlorination de surface. Ce traitement permet notamment de diminuer le caractère électrostatique du joint. On améliore ainsi les propriétés du joint, notamment de glissement. Ce traitement permet aussi de diminuer le relarguage d'extractibles et limite donc le risque d'interaction avec le produit actif. Avantageusement, ce traitement de surface peut être réalisé en immergeant le joint dans une solution contenant de l'eau, de l'acide chlorhydrique et de l'eau de javel. Il y a alors formation de chlore qui vient se greffer à la surface du joint.

Bien que la présente invention a été décrite en référence à un exemple de réalisation, il est entendu que la présente invention n'est pas limitée à ce mode de réalisation, mais qu'au contraire un homme du métier peut y apporter toute modification utile sans sortir du cadre de la présente invention, telle que définie par les revendications annexées.

## Revendications

1. Distributeur de produit fluide, comportant un réservoir contenant du produit fluide et un gaz propulseur, et une valve, de préférence une valve doseuse, montée sur ledit réservoir, ledit distributeur comprenant au moins un joint de valve, **caractérisé en ce qu'**au moins un joint de valve du distributeur comprend un élastomère à base d'éthylène propylène (EP) et/ou d'éthylène propylène diène (EPDM), et une charge minérale constituée de Sillitin, comprenant du quartz (SiO₂) et de la Kaolinite (Al₄[(0H)₈Si₄O₁₀]), ledit gaz propulseur comprenant du gaz HFC-134a et/ou du gaz HFC-227.

2. Distributeur selon la revendication 1, dans lequel la composition minéralogique de la charge minérale comprend entre 65 % et 95 %, de préférence 80 %, de quartz, et entre 5 % et 35 %, de préférence environ 20 %, de Kaolinite.

3. Distributeur selon l'une quelconque des revendications précédentes, dans lequel la charge minérale a un pH supérieur à 6, de préférence entre environ 7 et 8.

4. Distributeur selon l'une quelconque des revendications précédentes, dans lequel la charge minérale a une taille de particule moyenne comprise entre 1,5 et 4 microns, de préférence environ 2,2 microns.

5. Distributeur selon l'une quelconque des revendications précédentes, dans lequel ledit au moins un joint est, avant son assemblage dans le distributeur aérosol de produit fluide, soumis à un traitement de chlorination de surface.

6. Distributeur selon la revendication 5, dans lequel ledit au moins un joint est immergé dans une solution contenant de l'eau, de l'acide chlorhydrique et de l'eau de javel.

7. Distributeur selon l'une quelconque des revendications 1 à 6, dans lequel ladite valve comprend une soupape coulissant dans un corps de valve avec interposition d'un joint de soupape formant un joint de valve.

8. Distributeur selon l'une quelconque des revendications précédentes, dans lequel le réservoir contient en outre de l'alcool, notamment de l'éthanol.

## Patentansprüche

1. Spender für ein fluides Produkt, umfassend einen Behälter, der ein fluides Produkt und Treibgas enthält, und ein Ventil, vorzugsweise ein Dosierventil, das auf dem Behälter montiert ist, wobei der Spender mindestens eine Ventildichtung umfasst, **dadurch gekennzeichnet, dass** mindestens eine Ventildichtung des Spenders ein Elastomer auf Basis von Ethylenpropylen (EP) und/oder Ethylen-Propylen-Dien (EPDM) und einen mineralischen Füllstoff umfasst, der aus Sillitin besteht, umfassend Quarz (SiO₂) und Kaolinit (Al₄[0H)₈Si₄O₁₀]), wobei das Treibgas HFC-134a-Gas und/oder HFC-227-Gas umfasst.

2. Spender nach Anspruch 1, wobei die mineralogische Zusammensetzung des mineralischen Füllstoffes zwischen 65 % und 95 %, vorzugsweise 80 %, Quarz und zwischen 5 % und 35 %, vorzugsweise etwa 20 %, Kaolinit umfasst.

3. Spender nach einem der vorhergehenden Ansprüche, wobei der mineralische Füllstoff einen pH-Wert von höher als 6, vorzugsweise zwischen etwa 7 und 8 aufweist.

4. Spender nach einem der vorhergehenden Ansprüche, wobei der mineralische Füllstoff eine mittlere Teilchengröße zwischen 1,5 und 4 Mikrometern, vorzugsweise etwa 2,2 Mikrometer, aufweist.

5. Spender nach einem der vorhergehenden Ansprüche, wobei die mindestens eine Dichtung vor ihrer Montage in dem Sprühspender für ein fluides Produkt einer Oberflächen-Chlorierungsbehandlung unterzogen wird.

6. Spender nach Anspruch 5, wobei die mindestens eine Dichtung in eine Lösung getaucht wird, welche Wasser, Salzsäure sowie Javelwasser enthält.

7. Spender nach einem der Ansprüche 1 bis 6, wobei das Ventil ein federgespanntes Ventil umfasst, das in einem Ventilkörper gleitet, wobei eine Dichtung für das federgespannte Ventil zwischengeschaltet ist, die eine Ventildichtung bildet.

8. Spender nach einem der vorhergehenden Ansprüche, wobei der Behälter des Weiteren Alkohol, insbesondere Ethanol, enthält.

## Claims

1. A dispenser for a fluid product, that includes a reservoir containing a fluid product and a propellant gas, and a valve, preferably a measuring-out valve, mounted on the said reservoir, said dispenser including at least a valve seal, **characterised in that** said at least one valve seal of said dispenser includes an elastomer based upon ethylene propylene (EP) and/or ethylene propylene diene monomer (EPDM), and a mineral filler made of sillitin, comprising quartz (Si0₂) and Kaolinite (Al₄[(0H)₈Si₄O₁₀]), said propellant gas including HFC-134a gas and/or HFC-227 gas.

2. A dispenser according to claim 1, in which the mineralogical composition of the mineral filler includes between 65 % and 95 %, preferably 80 %, of quartz, and between 5 % and 35 %, preferably about 20 %, of Kaolinite.

3. A dispenser according to any of the preceding claims, in which the mineral filler has a pH greater than 6, preferably between about 7 and 8.

4. A dispenser according to any of the preceding claims, in which the mineral filler has an average particle size of between 1.5 and 4 microns, preferably about 2.2 microns.

5. A dispenser according to any of the preceding claims, in which said at least seal, before its assembly into the fluid product aerosol dispenser, is subjected to a surface chlorination treatment.

6. A dispenser according to claim 5, in which said at least seal is immersed in a solution containing water, hydrochloric acid and bleach.

7. A dispenser according to any of claims 1 to 6, in which said valve includes a valve element sliding in a valve body with the interposition of a valve element seal, forming a valve seal.

8. A dispenser according to any of the preceding claims, in which the reservoir also contains alcohol, and ethanol in particular.
